# EUROPEAN PATENT APPLICATION

(11) **EP 2 851 282 A1**
(43) Date of publication of application: **25.03.2015**
(21) Application number: 14184956.2
(22) Date of filing: 16.09.2014
(51) Int. Cl.: B64C 1/14, B64C 7/00, B60J 5/00

(54) **Cover plate and door arrangement for a means of transportation**

(30) Priority: 23.09.2013 DE 102013110480
(71) Applicant: Airbus Operations GmbH, 21129 Hamburg (DE)
(72) Inventor: Eilken, Wolfgang, 21129 Hamburg (DE); Hegenbart, Matthias, 21129 Hamburg (DE); Tiryaki, Memis, 21129 Hamburg (DE); Elbracht, Dirk, 21129 Hamburg (DE); Rahmel, Leonard, 22085 Hamburg (DE)
(74) Representative: Maiwald Patentanwalts GmbH

(57) **Abstract**

A cover plate (10) for covering a door clearance (20) between a skin (18) of a means of transportation (100) and a door (14) as well as a door arrangement (12) with such a cover plate (10) is proposed. The cover plate (10) comprises a mounting region (11a) for permanently fastening the cover plate (10) on the door (14); a covering region (11b) for covering the door clearance (20); and a fastening device (22, 22', 22") that is designed for fixing the covering region (11b) on the skin (18) when the door (14) is closed.

## Description

### Reference to Related Application

This application claims the benefit of the filing date of German Patent Application No. 10 2013 110 480.0 filed September 23, 2013, the disclosure of which application is hereby incorporated herein by reference.

### Field of the Invention

The invention pertains to a cover plate for covering a door clearance on a means of transportation, a door arrangement for a means of transportation, an aircraft with a cover plate or a door arrangement, as well as a method for closing a door.

### Background of the Invention

On an exterior of means of transportation, cover plates are frequently arranged in certain regions of a skin of the means of transportation for aerodynamic reasons, particularly in order to cover potential clearances, e.g., on doors or loading hatches. Such cover plates can be set in vibration due to air turbulences in a relative wind and thereby generate annoying noises. This may in turn be associated with increased aerodynamic drag and increased fuel consumption.

DE 10 2010 013 715 A1 and US 2011/02488514 A1 describe a door closing mechanism, as well as a method for closing a door of an aircraft.

DE 10 2011 085 269 A1 and US 2013/0105630 A1 describe a cover plate for a door clearance on an aircraft.

### Summary of the Invention

The invention is based on the objective of reducing annoying noises, aerodynamic drag and fuel consumption of a means of transportation, particularly of an aircraft.

This objective is solved with the subject-matter of the independent claims. Further embodiments of the invention are disclosed in the dependent claims and the following description.

One aspect of the invention concerns a cover plate for covering a door clearance between a skin of a means of transportation and a door. For example, the means of transportation may be an aircraft, a spacecraft, a train or a bus. The door may be a conventional door, but may also be, e.g., a hatch, a cargo hatch or a larger maintenance hatch on a skin of the means of transportation.

According to an embodiment of the invention, the cover plate comprises a mounting region for permanently fastening the cover plate on the door; a covering region for covering the door clearance; and a fastening device that is designed for fixing the covering region on the skin when the door is closed. In this context, the covering region and the mounting region of the cover plate may be interpreted as sections of the cover plate. The mounting region of the cover plate may be permanently and rigidly fastened on the door, e.g., by means of rivets, screws or adhesives. The cover plate may also form part of a door leaf of the door and be realized as one-piece with the door leaf.

An overall stability of the cover plate can be increased by fixing the mounting region of the cover plate on the skin of the means of transportation. This furthermore makes it possible to prevent the cover plate or the covering region of the cover plate from being set in vibration or fluttering due to a relative wind while the means of transportation is in motion. This can reduce the overall aerodynamic drag of the means of transportation and therefore result in fuel savings.

The door clearance can also be referred to as gap.

In an example, the cover plate is realized elastically and the covering region adjoins the skin when the door is closed. The covering region may therefore adjoin the skin with a tension as a kind of an elastic element when the door is closed. In other words, the cover plate may be tensioned due to its contact with the skin such that the covering region presses against the skin with a certain force and covers the door clearance.

According to an embodiment of the invention, the fastening device is designed for generating a force when the door is closed such that the covering region is pressed against the skin. The fastening device may hence serve for pressing the covering region against the skin with an additional force, i.e. a force in addition to the force that may be present due to the elastic tension of the cover plate, such that the covering region can no longer be lifted off and flutter, e.g. due to a relative wind.

According to another embodiment of the invention, additionally or alternatively, a door locking mechanism is provided for temporarily locking the door in a closed state urging the door against a door frame. The fastening device provides an additional fixation force for fixing the covering region on the skin when the door is closed at least during a state of moving condition of the means of transportation.

For example, the means of transportation is an aircraft and the fixation force is provided during flight of an aircraft, or also during takeoff and landing of an aircraft.

For example, the means of transportation is a train or bus and the fixation force is provided during driving condition of the train or bus with at least half of the normal travel speed, e.g. at a speed of over 40 km/h.

According to an embodiment of the invention, the covering region is provided with an abutting portion comprising an abutment surface for abutting the skin in an abutment direction when the door is closed.

According to an embodiment of the invention, the covering region is provided as a morphing structure deformable at least in the abutment direction. Further, the fastening device comprises a deformation contact surface provided on the covering region on a side of the abutment surface for a pressing abutment of an actuating element when the door is closed. Still further, the deformation contact surface is arranged on the covering region such that a pressing force in a direction opposite to the abutment direction leads to a deformation of the covering region such that the abutting portion is deformed in the abutment direction.

In an example, the morphing structure is provided as a buckling structure that buckles when the door is closed such that an increased abutment pressure of the cover plate's abutting portion is provided.

In another example, the actuating element is provided as a striker arrangement, or strike plate arrangement attached to a door frame arrangement.

In a further example, passive guide fittings are provided an at least one side portion for resting of the cover plate when closing the door to support the deformation of the deformation contact surface.

According to an embodiment of the invention, the fastening device comprises a bimetal arrangement provided in the covering region. The bimetal is configured such that a first degree of deformation is provided in a first temperature range and a second degree of deformation is provided in a second temperature range. The second degree of deformation is larger than the first degree of deformation in the abutment direction. The second temperature range relates to driving condition temperatures of the means of transportation, and the first temperature range relates to temperature conditions below the second temperature range.

In an example, the means of transportation is an aircraft and the first temperature range comprises ground temperature conditions and the second temperature range comprises cruising temperature conditions.

For example, the first temperature range, i.e. the ground temperature conditions, relates to a temperature of at least above -25°C, e.g. approximately -20°C to approximately 60°C air temperature. The second temperature range, i.e. the cruising temperature conditions, relates to a temperature of at least below -25°C, e.g. approximately -75°C to approximately -30°C, e.g. approximately -50°C to approximately -60°C, such as -56°C. The term approximately relates to a deviation of at least +/- 2°C, such as +/- 5 °C. In case of an aircraft, the figures of the temperature range relate to air temperatures outside the aircraft's skin.

According to an embodiment of the invention, the fastening device comprises an engagement device for activating a movable component provided on the skin's edge of the clearance. The engagement device is provided for causing the movable component to move towards the door, thus covering the clearance.

According to an embodiment of the invention, the fastening device comprises an active engagement device for engaging behind an edge of the skin to pull the cover plate towards the skin such that an abutment force of the abutment surface is increased.

According to an embodiment of the invention, the door cover plate comprises a pneumatic sealing device that has a locking edge. Further, the pneumatic sealing device is deflated in an open state of the door, and inflated when the door is closed such that the locking edge acts as the engagement device.

In case of an aircraft, the following examples are provided. In an example, the pneumatic sealing is be inflated by pressurized air provided for example by the cabin air pressure or by additional air supply such as from a high-pressure air tank or engine bleed air. In another example, the pneumatic sealing is provided with a closed air volume that expands due to lower air pressure in higher altitudes. For example, the pneumatic sealing is set such that the expansion starts in an altitude above approximately 5.000 meter above sea-level. In a further example, the pneumatic sealing is inflated by dynamic pressure generated via an NACA inlet, for example, when the means of transportation starts to move.

According to an embodiment of the invention, the fastening device comprises an engagement arrangement with a plurality of clamping pairs each comprising a first and a second clamping component provided on the cover plate and the skin respectively. The first and second clamping components each comprise at least one engaging portion to engage with an engaging portion of the other of the second and first clamping component. The engaging portion engage behind each other in a direction transverse to the skin's surface. The engaging portions engage with each other when the door is closed in a closing movement direction in a sliding manner such that the cover plate and the skin are urged against each other in a direction transverse to the closing movement direction.

In an example, the engaging portions are provided as hook and pile fastener with a plurality of mushroom like protrusions to provide the engagement.

In an example, the clamping pairs are provided with inclined engagement sections that are provided to engage with each other when the door is closed in a closing movement direction in a sliding manner such that the cover plate and the skin are urged against each other in a direction transverse to the closing movement direction.

In an example, the clamping pairs are provided as dovetail locking pairs comprising engagement surfaces that are at least inclined in relation to the abutment surface. In a further example, the engagement surfaces are also arranged in an inclined manner in relation to a transverse door closing movement, i.e. a movement of the door in the plane of the skin. For example, the transverse door closing movement may be provided as a sliding movement of the door, for example in a vertical or horizontal direction.

According to an embodiment of the invention, the fastening device comprises a deploying edge of the cover plate that extends when the door is closed to rest against a guide edge of the skin. An activating element is provided for deploying the deploying edge. The activating element is activated by the closing movement of the door when the door is closed.

In an example, the deploying edge is provided as an elevating flap extendable in the plane of the door. A guide member is provided on the edge of the skin such that the elevating flap can extend until its edge is abutting the guide member to effectively closing, i.e. covering the door clearance. The guiding member can be formed integrally with the adjacent skin.

In an example, the guide member and the edge of the elevating flap are provided with complementary inclined edges that are inclined with respect to a direction perpendicular to the adjacent skin, for example the aircraft outer skin of the fuselage structure.

In another example, the edge of the elevating flap is provided with a stepped protrusion comprising a protruding portion that, in the closed state, overlaps the guiding member on a back side.

In an example, the activating element is de-activated at least by an opening movement of the door when the door is opened. For example, the de-activation is caused when a door locking mechanism is released, e.g. before the actual opening movement occurs.

In an example, the deploying edge and the guide edge are provided with matching inclined abutment surface portions.

In another example, the deploying edge has an engaging portion to engage behind the guide edge.

According to an embodiment of the invention, the fastening device features at least one hook element that is arranged on a side of the cover plate or the covering region facing the skin, wherein the at least one hook element is designed for engaging into at least one corresponding hook element that is arranged on the side of the skin facing the cover plate or the covering region in order to fix the cover plate on the skin when the door is closed. For example, the hook elements on the cover plate and on the skin may be realized complementary to one another such that they generate a force, which pulls the cover plate or the covering region in the direction of the skin and thereby fixes the cover plate or the covering region, when they engage into one another in the closed state of the door. Mechanical fixing of this type for the cover plate by hook elements can be realized in a very stable and robust fashion. Such a solution can further be inexpensively implemented, as well as realized such that it requires little maintenance and functions reliably, because no electric and/or electronic components whatsoever are required.

In an example, the door is designed for locking in the door frame with a transverse motion in the door frame during closing of the door. The hook elements are realized in such a way that they engage into one another during the transverse motion.

According to an embodiment of the invention, the cover plate comprises a magnetically active layer that is arranged at least in a section of the cover plate on its side that faces the skin and designed for being pulled in the direction of the skin by a magnetic element. For example, the magnetically active layer may be arranged on a section of the covering region, on the entire covering region or even on the entire side of the cover plate that faces the skin. In this context, "magnetically active" may be interpreted as magnetisable and/or magnetized such that the magnetically active layer can be subjected to a magnetic force in a magnetic field.

In an example, the magnetically active layer of the cover plate is a magnetically active film or a magnetically active plate. For example, the film or the plate may be permanently connected to the cover plate, e.g. by means of rivets, screws or adhesives. However, the entire cover plate may also be made of a magnetically active material.

In an example, the at least one magnetic element comprises at least one electromagnet and the at least one electromagnet is coupled to a locking mechanism of the door such that the cover plate is automatically fixed on the skin by the at least one electromagnet when the door is locked.

In an example, the cover plate features a fibre-reinforced composite material. A fibre-reinforced composite material can be advantageously utilized as material for the cover plate, in particular, due to its lightness and flexibility, as well as its stability.

Another aspect of the invention concerns a door arrangement for a means of transportation.

According to an embodiment of the invention, the door arrangement comprises a door frame, a door and a cover plate according to one of the examples described above and below that is fastened on the door, e.g. as described above and below. The cover plate or the mounting region of the cover plate may be fastened, for example, on an upper end and/or on the sides of the door.

In an example, at least one first hook element is provided on the cover plate, and at least one second hook element is provided on the skin of the means of transportation for fixing the cover plate on a skin, and designed for engaging into the first hook element when the door is closed such that the cover plate is fixed on the skin. The at least one first hook element protrudes from the cover plate at least in a section. The at least one second hook element further comprises a first region that is fastened on the skin, a second region that protrudes from the skin, and a third region that is realized correspondent to the at least one first hook element.

In an example, the door arrangement comprises at least one first hook element on the mounting region of the cover plate; and at least one second hook element on the skin of the means of transportation serving for fixing the cover plate on the skin and designed for engaging into the first hook element when the door is closed and to thereby fix the cover plate on the skin. In this case, the at least one first hook element may be arranged on a side of the cover plate that faces the skin and the at least one second hook element may be arranged on a side of the skin that faces the cover plate. The at least one first hook element protrudes from the cover plate at least in one section. The at least one second hook element comprises a first region that is fastened on the skin, a second region that protrudes from the skin and a third region that is realized correspondent and/or complementary to the at least one first hook element such that the hook elements can engage into one another.

In an example, the door is designed for locking in the door frame with a transverse motion during closing, wherein the hook elements are realized and/or arranged in such a way that they engage into one another during this transverse motion. In this context, a transverse motion can be interpreted as a motion of the door within the door frame that takes place transverse to a surface of the door. This transverse motion therefore may be a lateral motion, i.e. a motion transverse to the laterally extending parts of the door frame. However, the transverse motion may also be a downward motion or upward motion within the door frame. In any case, the transverse motion may essentially take place orthogonal to a normal vector on a surface of the skin.

In an example, the door arrangement comprises a magnetically active layer on at least a section of a side of the cover plate that faces the skin, and at least one magnetic element that is arranged on a side of the skin that faces away from the cover plate. In this case, the magnetic element may be arranged in a region of the skin that is covered by the cover plate when the door is closed. The at least one magnetic element is designed for pulling the cover plate in the direction of the skin with a magnetic force that can act upon the magnetically active layer when the door is closed such that the cover plate is magnetically fixed on the skin.

In this case, the magnetically active layer may also be arranged, for example, on a section of the covering region, on the entire covering region or on the entire side of the cover plate that faces the skin. In this context, "magnetically active" can be interpreted as magnetisable and/or magnetized such that the magnetically active layer can be subjected to a magnetic force in a magnetic field.

In an example, the at least one magnetic element comprises at least one electromagnet, and the at least one electromagnet is coupled to a locking mechanism of the door such that the cover plate is automatically fixed on the skin by the at least one electromagnet when the door is locked. In this context, "coupling" can be interpreted as "driving" and/or "activating" and/or "actuating." For example, the coupling of the electromagnet to the locking mechanism of the door may reduce the number of manipulations required for definitively closing the door and an actuation of the magnetic element or the electromagnet cannot be inadvertently forgotten.

Another aspect of the invention concerns an aircraft with a cover plate of the type described above and below and/or a door arrangement of the type described above and below. For example, the aircraft may be a passenger aircraft or a cargo aircraft.

In a further example, for the cover plate, combinations of the above described examples of the cover plate are provided. For example, at least two of the group of the deformable morphing structure, the bimetal arrangement, the engagement device, the active engagement device, the pneumatic sealing device, the plurality of clamping pairs, the deploying edge, the at least one hook element and the magnetically active layer are provided.

In an example it is provided a combination of the deformable morphing structure with the bimetal arrangement, or the deformable morphing structure with the engagement device, or the engagement device with the active engagement device and/or with the pneumatic sealing device, or the plurality of clamping pairs with the deploying edge, or the at least one hook element with the magnetically active layer, or the bimetal arrangement with the engagement device, or the pneumatic sealing device with the plurality of clamping pairs.

In a still further example, the door arrangement is provided with one of these combinations for the cover plate.

Another aspect of the invention concerns a method for closing a door of a means of transportation, with said method comprising the steps of:
a) moving the door in the direction of a skin of the means of transportation in a door frame;
b) covering a door clearance between the skin of the means of transportation and the door with a cover plate; and
c) fixing the cover plate on the skin with a fastening device on the cover plate. As described above and below, the cover plate may in this case be fastened on the door with a mounting region and may comprise a covering region that is designed for covering the door clearance.

In an example, the method further comprises the steps of:
d) locking the door in the door frame by means of a transverse motion; and
e) fixing the cover plate by means of hook elements on the cover plate and the skin.

In this case, the hook elements are realized in such a way that they engage into one another during the transverse motion and thereby fix the cover plate on the skin.

For example, several hook elements may be provided on a side of the skin that faces the cover plate and additional hook elements may be provided on a side of the cover plate that faces the skin.

In further examples of the method, the door clearance is covered by a cover plate according to one of the examples described above.

Exemplary embodiments of the invention are described in greater detail below with reference to the attached figures.

### Brief Description of the Figures

Fig. 1A schematically shows a means of transportation with a conventional cover plate and door arrangement.
Fig. 1B schematically shows a section through the cover plate and the door arrangement in Fig. 1A along a centre plane.
Fig. 1C schematically shows another conventional cover plate and door arrangement of a means of transportation.
Fig. 1D schematically shows a detail view of the cover plate of Fig. 1C.
Fig. 2A schematically shows a cover plate and a door arrangement according to a potential embodiment of the invention.
Fig. 2B schematically shows a section through the cover plate and the door arrangement of Fig. 2A along a centre plane.
Fig. 2C schematically shows a section through a fastening device of the cover plate of Fig. 2A along a plane.
Fig. 3A schematically shows a cover plate and a door arrangement according to another potential embodiment of the invention.
Fig. 3B schematically shows a section through the cover plate and the door arrangement of Fig. 3A along a centre plane.
Fig. 3C schematically shows another example of a section through the cover plate and the door arrangement.
Fig. 4A schematically shows a cover plate and a door arrangement according to an embodiment of the invention.
Fig. 4B schematically shows a section through the cover plate and the door arrangement of Fig. 4A along a centre plane.
Fig. 4C schematically shows details of the cover plate of Fig. 4B.
Fig. 5 shows a section through a door arrangement and a cover plate according to an embodiment of the invention.
Fig. 6 shows a further embodiment for a cover plate comprising a morphing structure, wherein Fig. 6A shows a schematic outside view when a door is slightly opened, Fig. 6B shows a schematic cross-section when the door is slightly opened, Fig. 6C shows an outside view when the door is closed, and Fig. 6D shows a schematic cross-section when the door is closed.
Fig. 7 shows another embodiment of a cover plate comprising a bimetal cover plate in a schematic cross-section.
Fig. 8 shows a further embodiment of a cover plate comprising a guided hinged flap, wherein Fig. 8A shows an open position, Fig. 8B shows a door in a slightly open state and Fig. 8C shows the door closed in a schematic cross-section.
Fig. 9 shows a schematic cross-section through a cover plate comprising an engagement connection with a mushroom-like snap connection.
Fig. 10 shows an embodiment of a cover plate with a clamp, wherein Fig. 10A shows a schematic cross-section of a disengaged clamp, and Fig. 10B shows an engaged clamp.
Fig. 11 shows an embodiment with a latch lock mechanism in a schematic cross-section.
Fig. 12 shows an embodiment with a latch lock mechanism.
Fig. 13 shows an embodiment with a pneumatic inflatable seal, wherein Fig. 13A shows a schematic cross-section in an open position, Fig. 13B shows a slightly opened door, Fig. 13C shows a closed door, and Fig. 13D shows a closed door position with a pressurized seal.
Fig. 14 shows an embodiment with an elevating flap, wherein Fig. 14A shows a cross-section of an open position, Fig. 14B shows a first contact of the elevating flap, and Fig. 14C shows a door in a closed position, and Fig. 14D shows a further embodiment of an elevating flap.
Fig. 15 shows an embodiment with engagement connection, wherein Fig. 15A shows an outside view indicating a dovetail locking system, and Fig. 15B shows the dovetail locking system of Fig. 15A in a closed position, and Fig. 15C shows a schematic cross-section of the dovetail locking system with a slightly opened door, and Fig. 15D shows a dovetail locking system in a schematic cross-section with a closed door.
Fig. 16 shows an aircraft with a door arrangement and a cover plate according to an embodiment of the invention.
Fig. 17 shows a flow chart that illustrates the steps of a method for closing a door on a means of transportation according to an embodiment of the invention.

Identical or similar components are basically identified by the same reference symbols.

### Detailed Description of Exemplary Embodiments

The illustrations in the figures are merely schematic and not true-to-scale.

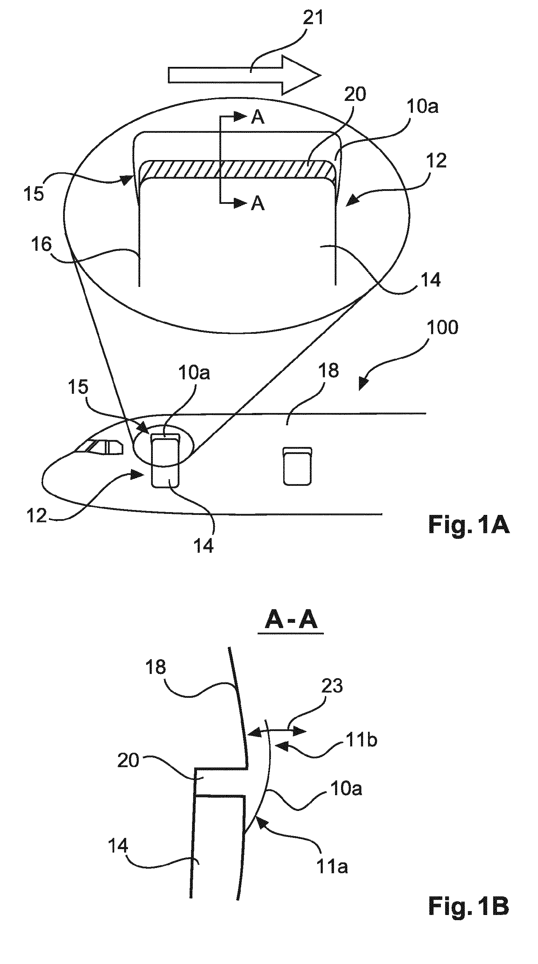

Fig. 1A schematically shows a means of transportation 100 with a conventional cover plate 10a and a conventional door arrangement 12, wherein the means of transportation 100 may, for example, be an aircraft.

The door arrangement 12 comprises a door 14 that is arranged in a door frame 16 in a skin 18 of the means of transportation 100. The cover plate 10a of the door arrangement 12 is arranged on an outer side of the door 14 in an upper region 15 of the door 14 and covers the door 14 and the door frame 16 in the upper region 15, as well as part on the sides of the door 14 and the door frame 16.

The cover plate 10a further covers a door clearance 20 between the skin 18 and the door 14 in the upper region 15.

When the means of transportation 100 is in motion, a comparatively strong relative wind 21 can occasionally occur as indicated with the arrow 21 in Fig. 1A. The relative wind 21 may cause the cover plate 10a to be lifted off the skin 18 and to begin to flutter. This may in turn be associated with annoying noises.

This is elucidated in greater detail with reference to a section through the cover plate and the door arrangement in Fig. 1A along a central plane A-A which is schematically illustrated in Fig. 1B, wherein the viewing direction of the section shown extends toward the right in the plane of projection of Fig. 1A.

Fig. 1B clearly shows the clearance 20 between the skin 18 and the door 14, which clearance is covered with the cover plate 10a. In this case, the cover plate 10a has a mounting region 11a that is fastened on the door 14 and a covering region 11b that covers the clearance 20. The mounting region 11a may be fastened on the door 14, for example, by rivets, screws, bonding or welding. All in all, the cover plate 10a may be realized elastically, wherein the covering region 11b may adjoin the skin 18 with tension.

The relative wind 21 may cause the covering region 11b to be lifted off the skin 18 and to begin vibrating or fluttering. This vibrating or fluttering is respectively indicated with the arrow 23 in Fig. 1B.

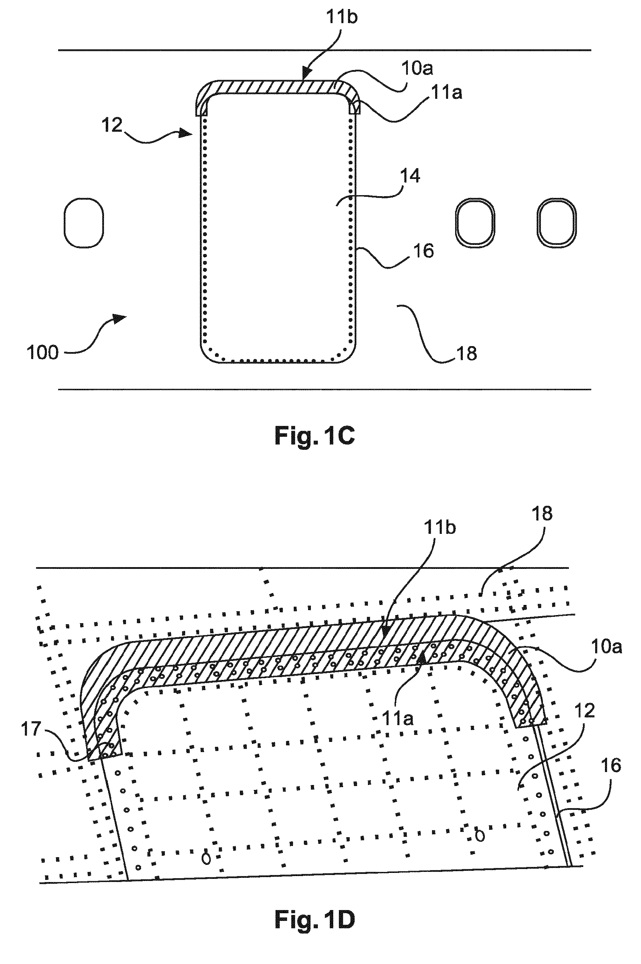

Fig. 1C schematically shows a further conventional cover plate 10a and door arrangement 12 of a means of transportation 100, and Fig. 1D schematically shows a detail of the cover plate 10a in Fig. 1C. If not indicated otherwise, the cover plate 10a and the door arrangement 12 may in this case comprise the same components as the cover plate 10a and the door arrangement 12 in Fig. 1A and Fig. 1B.

In Fig. 1C and Fig. 1D, the mounting region 11a of the cover plate 10a is fastened on the door 14 with rivets 17 and covers the upper region 15 of the door arrangement 12, part of the door 14, part of the door frame 16 and the clearance 20 between the skin 18 of the means of transportation 100 and the door 14.

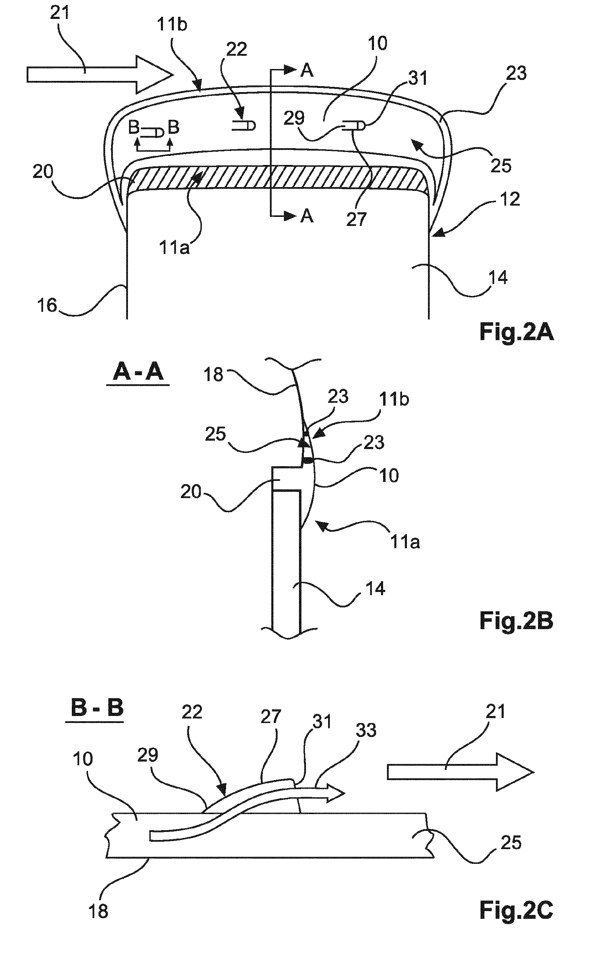

Fig. 2A schematically shows a cover plate 10 and a door arrangement 12 according to a further embodiment. If not indicated otherwise, the cover plate 10 and the door arrangement 12 in Fig. 2A may comprise the same components as the cover plate 10a and the door arrangement 12 in Fig. 1A.

Fastening devices 22 are arranged on the covering region 11b of the cover plate 10 and designed for respectively fixing the cover plate 10 or the covering region 11b on the skin 18.

In this case, the fastening devices 22 may protrude from the cover plate 10, e.g. in the form of air outlets 27. These air outlets 27 may feature a closed region 29 on one side and an open region or an opening 31 on an opposite side. The closed region is directed against the relative wind 21 in this case. The fastening device 22 may further comprise a peripheral seal 23 that radially extends around the covering region 11b. For example, the seal 23 may be made of silicone, e.g. in the form of a sealing lip, and arranged on a side of the covering region 11b that faces the skin 18.

When the relative wind 21 passes over the air outlets 27, air is evacuated from the intermediate space between the covering region 11b and the skin 18 through the openings 31 such that a negative pressure zone 25 can be created between covering region 11b and skin 18. The seal 23 makes it possible to prevent air from respectively flowing underneath the covering region 11b or into the negative pressure zone 25 from an edge region of the cover plate 10. All in all, the pressure differential between an outer region with high pressure and the negative pressure zone 25 with low pressure makes it possible to generate a contact pressure that is directed toward the skin 18 and that can fix the covering region 11b of the cover plate 10 on the skin 18. This can prevent the covering region 11b from being lifted off the skin 18 and the cover plate 10 from fluttering.

Fig. 2B schematically shows a section through the cover plate 10 and the door arrangement 12 in Fig. 2A along a central plane A-A, wherein this figure clearly shows that the peripheral seal 23 adjoins the skin 18 above the door clearance 20 such that the negative pressure zone 25 can be created and a pressure compensation via the edge of the cover plate 10 can be prevented.

Fig. 2C schematically shows a section through an air outlet 27 of the fastening device 22 of the cover plate 10 in Fig. 2A.

Fig. 2C illustrates how air is evacuated from the intermediate space between the covering region 11b of the cover plate 10 and the skin by the relative wind 21 through the opening 31 of the air outlet 27. This is indicated with the arrow 33 in Fig. 2C.

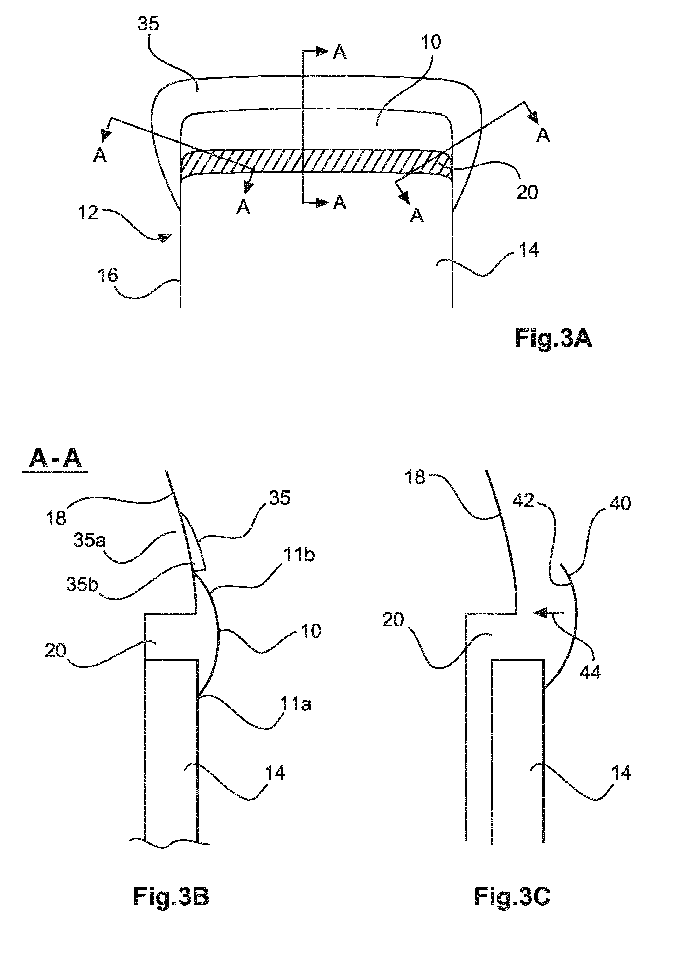

Fig. 3A schematically shows a cover plate 10 and a door arrangement 12 according to a further potential embodiment. If not indicated otherwise, the cover plate 10 and the door arrangement 12 in Fig. 3A may comprise the same components as the cover plate 10a and the door arrangement 12 in Fig. 1A.

In the door arrangement 12 illustrated in Fig. 3A, a spoiler 35 is arranged on the skin 18 above the covering region 11b of the cover plate 10. The spoiler 35 may be made, e.g., of aluminium, steel or a fibre-reinforced composite material and fastened on the skin 18 by adhesives, rivets or screws.

For example, the spoiler 35 may protrude from the skin 18 and extend above the cover plate 10 in a U-shaped fashion. The spoiler 35 may be designed for generating air turbulences around the cover plate 10. In other words, the spoiler 35 may be designed for disturbing an air flow around the cover plate 10 caused by the relative wind 21. These turbulences make it possible, for example, to prevent a directional air flow from being admitted between the covering region 11b and the skin 18 such that the covering region 11b is not lifted off by the air flow and therefore can no longer flutter.

Fig. 3B schematically shows a section through the cover plate 10 and the door arrangement 12 in Fig. 3A along a centre plane A-A, wherein a lateral profile of the spoiler 35 is illustrated in this figure. For example, the spoiler 35 may adjoin the skin in a relatively flat fashion with a first region 35a and protrude from the skin 18 in a second region 35b that may border on the covering region 11b of the cover plate 10 such that the air flow can be respectively disturbed in the immediate vicinity or in an edge region of the cover plate 10 and air turbulences can be generated.

In an example, as indicated in Fig. 3C, the covering region 11d is provided with an abutting portion 40 comprising an abutment surface 42 for abutting the skin in an abutment direction, indicated with arrow 44, when the door is closed.

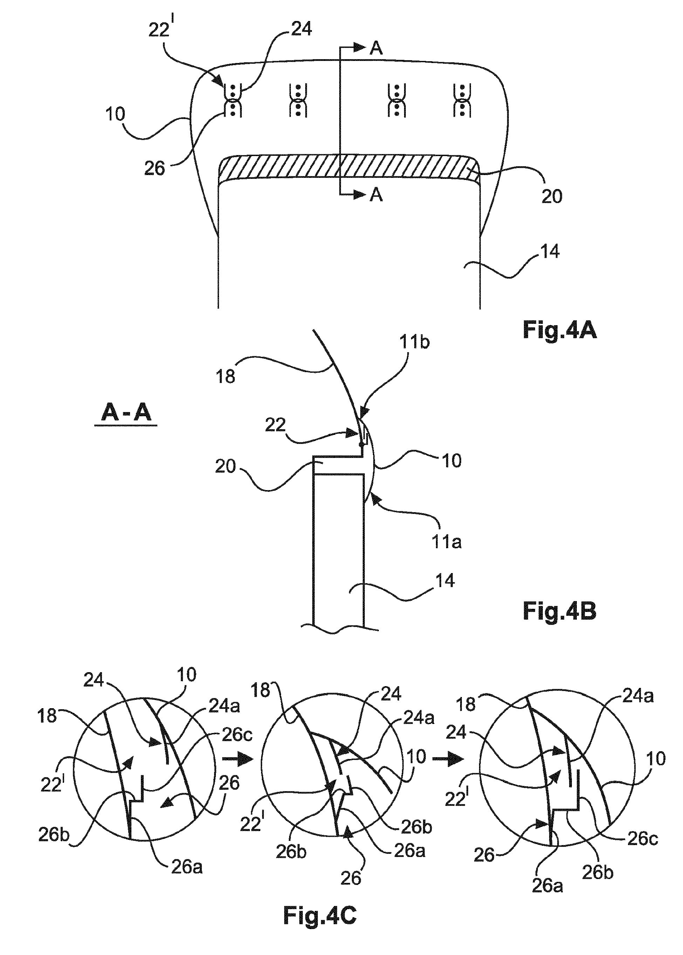

Fig. 4A schematically shows a cover plate 10 and a door arrangement 12 according to an embodiment of the invention. If not indicated otherwise, the cover plate 10 and the door arrangement 12 in Fig. 4A comprise the same components as the cover plate 10a and the door arrangement 12 in Fig. 1A.

The cover plate 10 and the door arrangement 12 in Fig. 4A respectively comprise a fastening device 22'. The fastening device 22' comprises several hook elements 24 that are arranged in the covering region 11b on a side of the cover plate that faces the skin 18. The fastening device 22' further comprises several hook elements 26 that are arranged on a side of the skin 18 that faces the covering region 11b. The hook elements 26 may be realized complementary and/or correspondent to the hook elements 24.

All in all, the hook elements 24 are designed for engaging the corresponding hook elements 26 when the door 14 is closed such that the cover plate 10 is fixed on the skin 18 and it is possible to prevent the covering region 11b from being lifted off the skin 18, e.g. due to the relative wind 21, as well as to prevent the cover plate 10 from fluttering.

Fig. 4B schematically shows a section through the cover plate 10 and the door arrangement 12 in Fig. 4A along a central plane A-A, wherein the door 14 illustrated in Fig. 4B is closed. Fig. 4B clearly shows how the hook elements 24, 26 engage into one another when the door 14 is closed such that the covering region 11b is fixed on the skin 18.

Fig. 4C schematically shows details of the cover plate 10 in Fig. 4B, wherein Fig. 4C shows three snapshots during a closing process of the door 14. In this case, the left snapshot shows the cover plate 10 and the fastening device 22' while the door 14 is open and the right snapshot shows the cover plate 10 while the door 14 is closed.

The hook element 24 arranged on the covering region 11b of the cover plate 10 protrudes from the cover plate at least in a section 24a. The hook element 26, in contrast, has a first region 26a that is fastened on the skin 18, a second region 26b that protrudes from the skin 18, and a third region 26c that is realized correspondent to the hook element 24. All in all, the hook elements 24, 26 may be made of a robust and lightweight material, e.g. of aluminium or even of steel, and respectively fastened on the skin 18 and the cover plate 10 by rivets, screws or adhesives.

When the door 14 of the door arrangement 12 is closed, the door 14 including the cover plate 10 is initially moved into the door frame 16 in the direction of the skin 10. This is illustrated in the left snapshot of Fig. 4C. The cover plate 10 adjoins the skin 18 once the door is completely positioned in the door frame 16. This is illustrated in the centre snapshot of Fig. 4C. In order to definitively close and lock the door 14, the door 14 is lowered in the door frame 16, wherein this creates the door clearance 20 that is covered with the cover plate 10. When the door 14 is lowered in the door frame 16, the hook element 24 engages the hook element 26 such that the covering region 11b is pressed against the skin 18 and fixed. This is illustrated in the right snapshot in Fig. 4C.

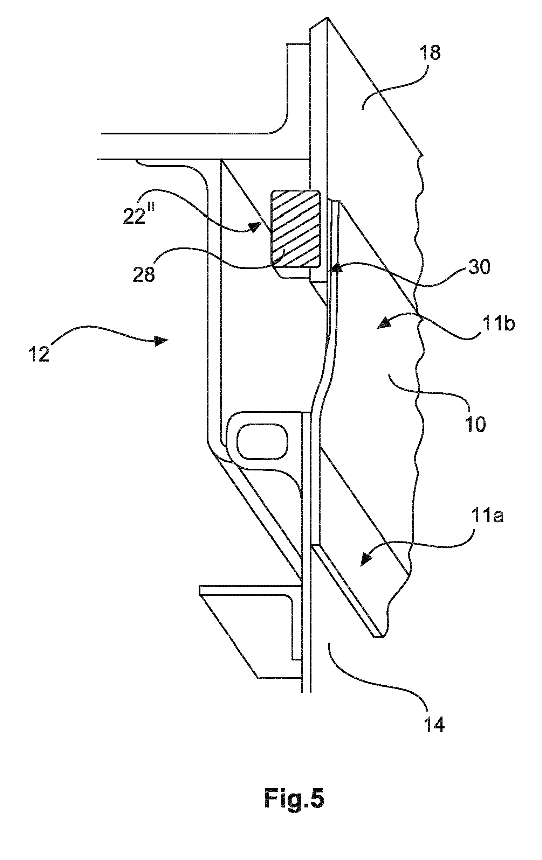

Fig. 5 shows a section through a door arrangement 12 and a cover plate 10 according to an embodiment of the invention. If not indicated otherwise, the cover plate 10 and the door arrangement 12 in Fig. 4A comprise the same components as the cover plate 10a and the door arrangement 12 in Fig. 1A.

The door arrangement 12 in Fig. 5 shows a fastening device 22", wherein the fastening device 22" is a magnetically active or magnetisable film 30 that is arranged in a section of the covering region 11b of the cover plate 10 on a side of the cover plate 10 that faces the skin 18. The fastening device 22" furthermore comprises a magnetic element 28 arranged on the side of the skin 18 that faces away from the cover plate 10. The magnetically active film 30 is designed for being pulled in the direction of the skin 18 by the magnetic element 28 when the door is closed such that the covering region 11b of the cover plate 10 is fixed on the skin.

The magnetic element 28 may comprise an electromagnet that may be coupled to a locking mechanism of the door 14 such that the cover plate 10 is automatically fixed on the skin 18 by means of the electromagnet when the door 14 is locked. However, the magnetic element 28 may, for example, also be a permanent magnet.

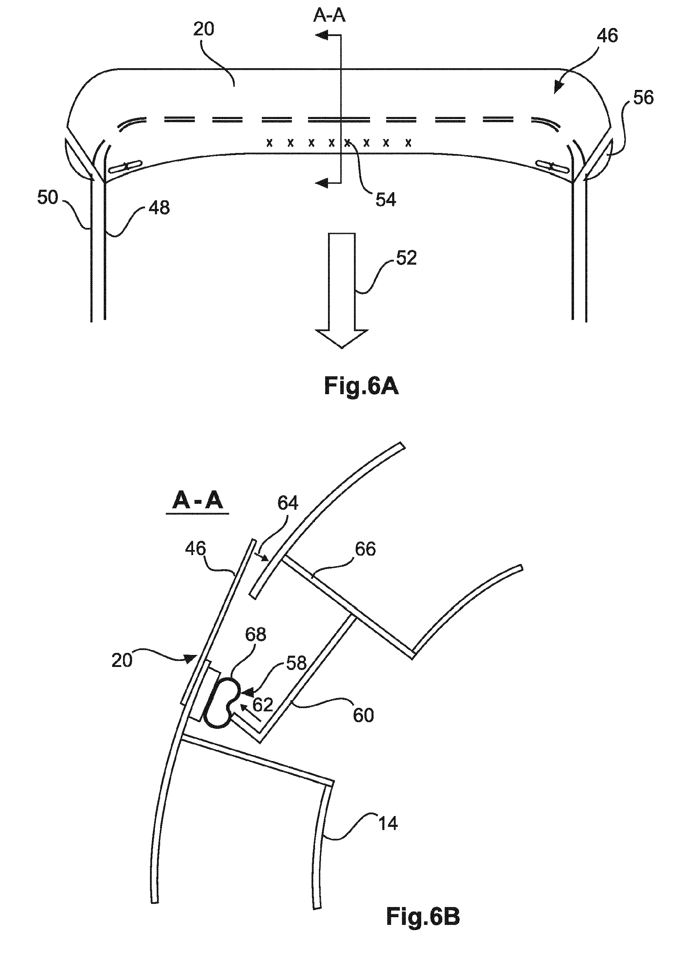

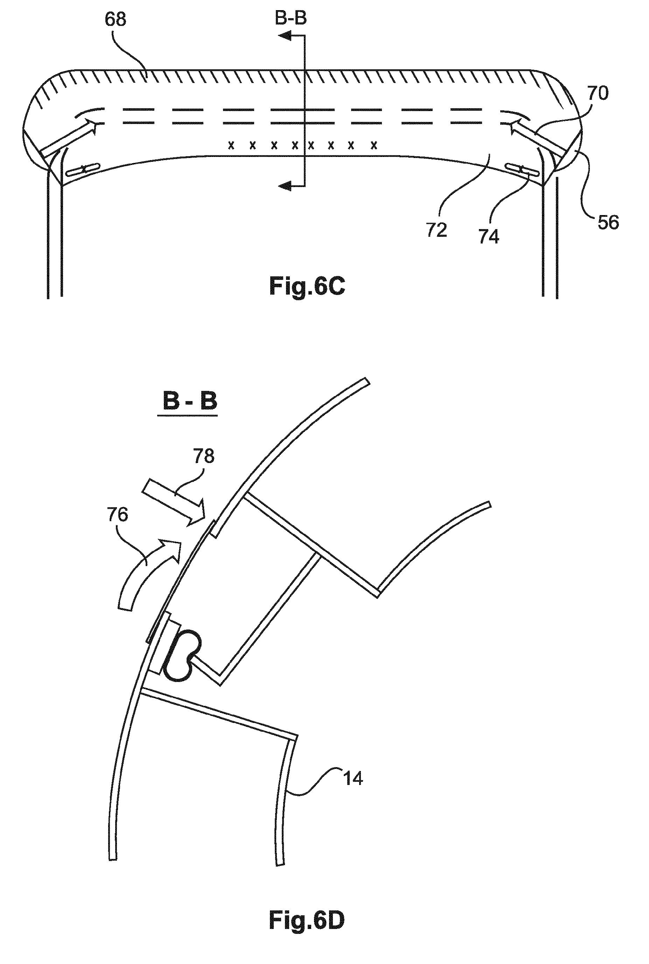

In Fig. 6, an example is shown where the covering region is provided as a morphing structure 46, which will be explained in the following. The morphing structure 46 is deformable at least in the abutment direction 44.

Fig. 6A shows an outside view of a door 14, indicated with a door outline 48 being slightly opened. A door cut-out of the fuselage is indicated with an outline 50. An arrow 52 indicates a movement of the door when the door is closed. Above the door, the cover plate 10 is provided, which may be riveted to the door, as indicated with an X, see also reference number 54, indicating rivet positions.

As an option, passive guide fittings 56 are provided on the side of the door in the area of the fuselage.

Fig. 6B schematically shows a cross-section through cross-section line A-A in Fig. 6A. The door 14 is indicated having the cover region 10 above. The cover region 10 is provided as the morphing structure 46. The fastening device comprises a deformation contact surface 58 that is provided on the covering region on a side of the abutment surface for a pressing abutment of an actuating element 60, for example referred to as a striker, when the door is closed. The deformation contact surface is arranged on the covering region such that a pressing force, indicated with an arrow 62, in a direction opposite to the abutment direction leads to a deformation, as indicated with a further arrow 64, of the covering region such that the abutting portion is deformed in the abutment direction. In Fig. 6B, a fuselage 66 is further indicated. For example, the striker may contact an intermediate element such as a sealing-like structure 68.

The deformation may also be provided by the sidewards arranged passive guide fittings 56, and the striker 60 is pressing against the elastic sealing 68 for sealing purposes. However, the striker may also act as an activation element for the deformation, alternatively or in addition to the passive guide fittings 56.

Fig. 6C shows an outside view of the cover plate being in contact with the skin, provided by contact area of the deformation, which contact area is indicated with patterns 68.

As mentioned above, an option is shown in form of the passive guide fittings 56, which lead to a compression force 70 that leads to compression areas 72 in the cover plate. For example, for fixation, a slotted hole 74 is provided to allow a transversal replacement or deformation movement of the cover plate.

As shown in Fig. 6D, the morphing leads to a buckling, as indicated with a buckling arrow 76 that results in a contact or pressing force 78 pressing the cover plate against the skin.

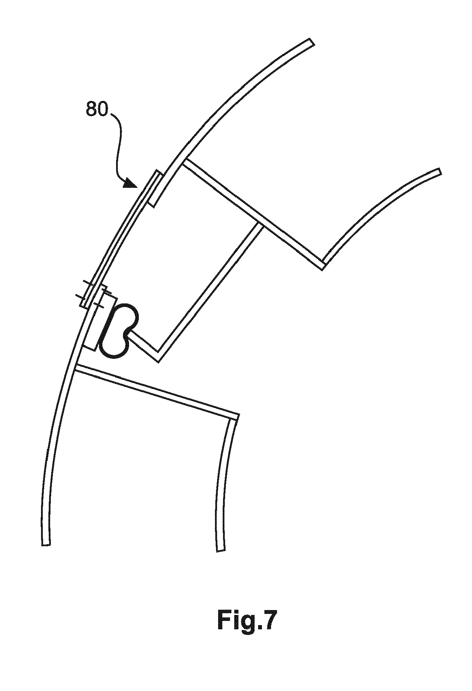

Fig. 7 indicates a further example, where the fastening device comprises a bimetal arrangement 80 provided in the covering region. The bimetal is configured such that a first degree of deformation is provided in a first temperature range and a second degree of deformation is provided in a second temperature range. The second degree of deformation is larger than the first degree of deformation in the abutment direction. The second temperature range relates to driving condition temperatures of the means of transportations, and the first temperature range relates to temperature conditions above the second temperature range. For example, the first temperature range relates to conditions during loading and embarkment positioning of an aircraft, wherein the second temperature range relates to flying conditions in high altitudes provided for aircraft travel.

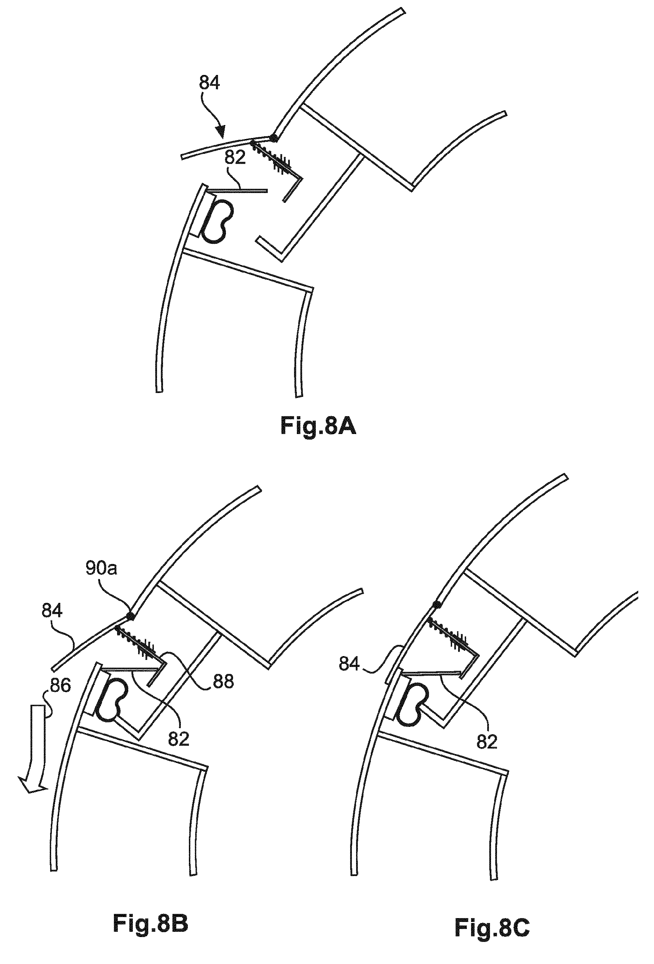

Fig. 8 shows a further example of the fastening device comprising an engagement device 82 for activating a movable component 84 provided on the skins edge of the clearance.

Fig. 8A shows a vertical cross-section in a schematic manner, indicating the engagement device attached to the door, and the movable component 84. The engagement device 82 is provided for causing the movable component to move towards the door, thus covering the clearance.

Fig. 8B indicates a closing movement 86 of the door that results in the engagement device 82 acting on a linkage 88 that is supported and biased by a spring member 90 and that acts on the flap as the movable component 84. The movable component 84 may be provided with a hinged support 90a.

Due to the door movement, as indicated in Fig. 8C, the guided hinged flap covers the clearance when the door is closed.

In a further example, the fastening device comprises an active engagement device for engaging behind an edge of the skin to pull the cover plate towards the skin such that an abutment force of the abutment surface is increased.

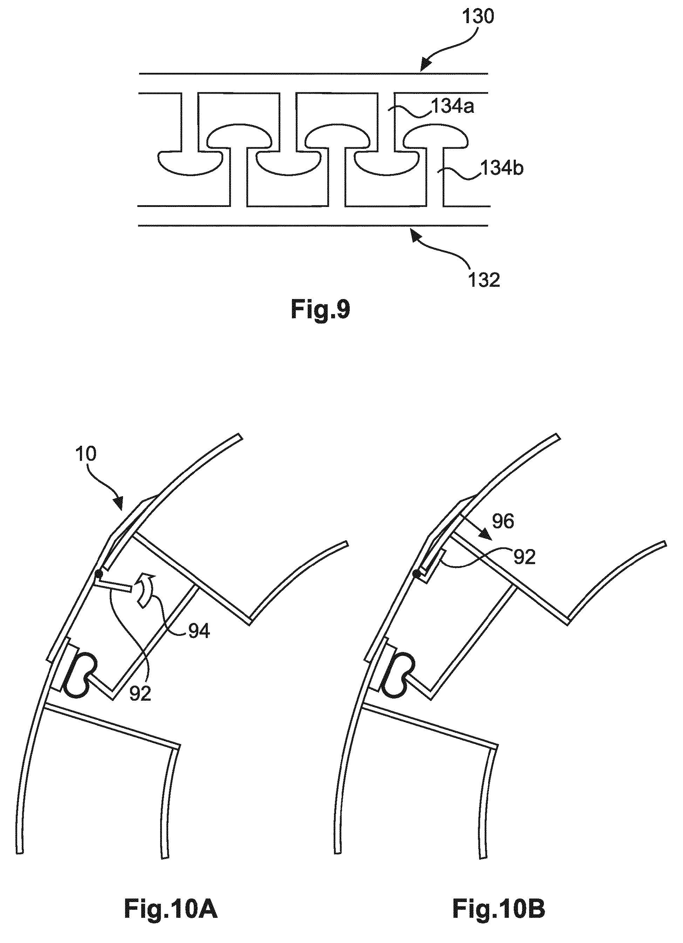

For example, Fig. 10 shows a mechanically actuated cover plate.

Fig. 10A shows a clamp 92 that is movably attached to the cover plate 10. An arrow 94 indicates the movability of the clamp 92.

Fig. 10B shows the clamp 92 in an engaged position thus pulling the cover plate towards the skin, as indicated with arrow 96.

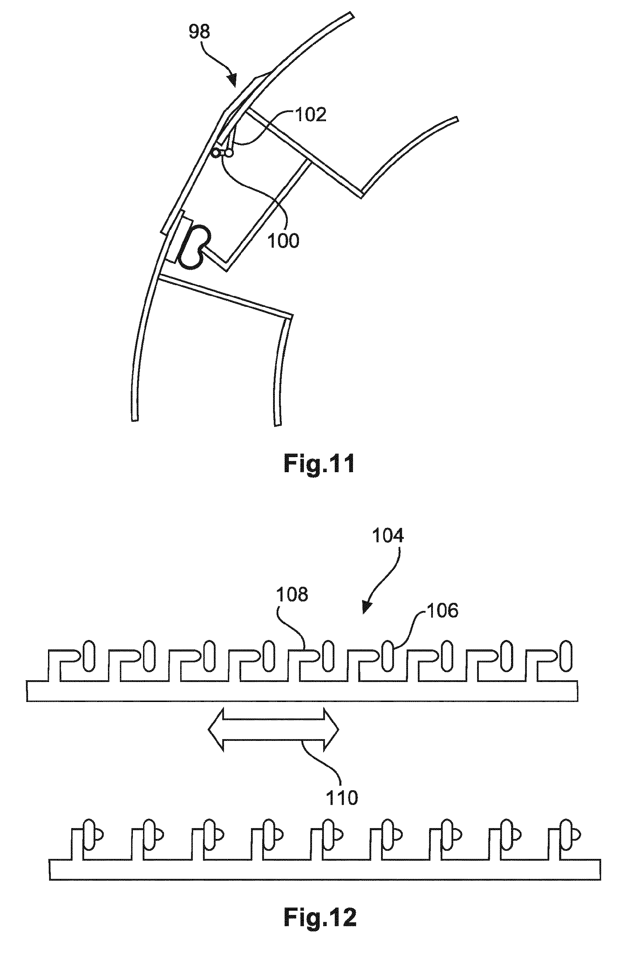

Fig. 11 shows a further cross-section of an example with a latch look mechanism 98, comprising a lug 99 and a latch 97, thus resulting in the pressing of the cover plate against the skin of the means of transportation.

Fig. 12 shows a further example of a latch lock mechanism 95 comprising a plurality of the lugs 93 and a plurality of latches 91. When the door is closed, and thus performs a closing movement 89, the latch and the lugs engage with each other.

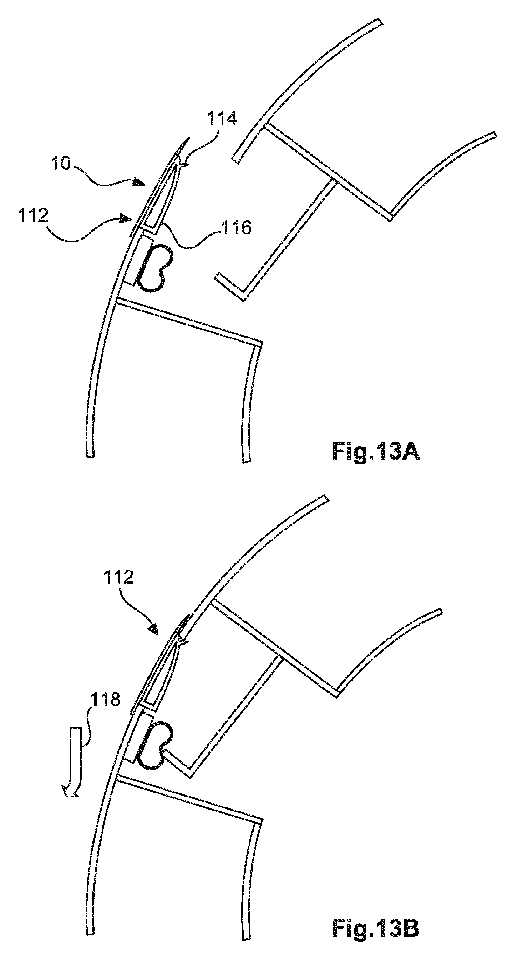

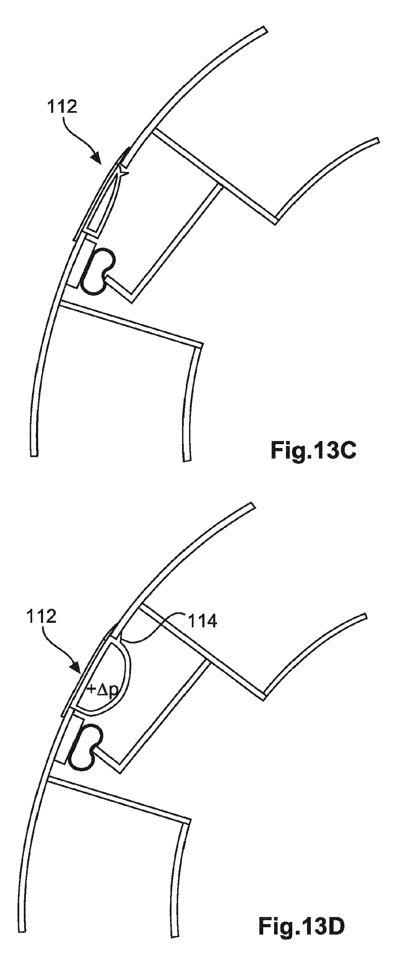

Fig. 13 shows a further example of the door cover plate 10 comprising a pneumatic sealing device 87 that has a locking edge 85. The pneumatic sealing device is deflated in an open state of the door, as indicated in Fig. 13A, and is inflated when the door is closed such that the locking edge acts as the engagement device, as indicated in Fig. 13D.

In Fig. 13A, the sealing device 87 comprises an inflatable seal 83.

Fig. 13B shows the door in a slightly opened state, wherein the door movement is further indicated with movement arrow 81.

Fig. 13C shows the door in a closed state, but the pneumatic sealing device still being in a deflated state.

In Fig. 13D, the sealing device 87 is inflated, as indicated with the positive difference in pressure +ΔP. Due to the inflation of the sealing device, the locking edge 85 of the sealing device 87 is engaging the edge of the fuselage or the skin.

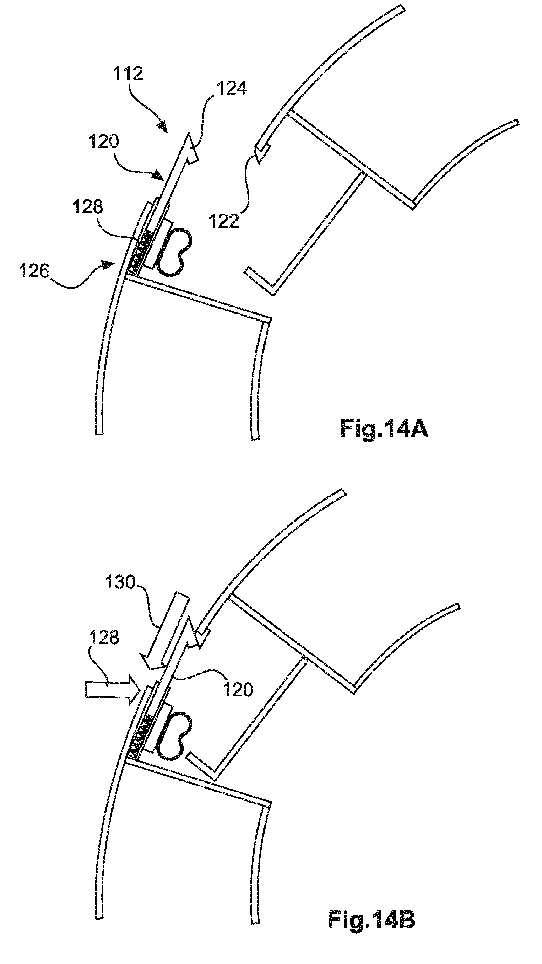

Fig. 14A shows a further example, where the fastening device comprises a deploying edge 79 of the cover plate 10 that extends when the door is closed to rest against a guide edge of the skin, for example a tapered edge 77. The deploying edge comprises a respective tapered guiding surface 75. An activating element 73 is provided, for example a spring 71. The activating element 73 is provided for deploying the deploying edge, wherein the activating element is activated by the closing movement of the door when the door is closed.

Fig. 14A shows the open position in a cross-sectional overview, and Fig. 14B shows a first contact of the deploying edge 79, also referred to as elevating flap, where a first arrow 69 indicates the first vector of the door closing movement, and a second arrow 67 indicates the further sliding movement of the door when the door is being closed.

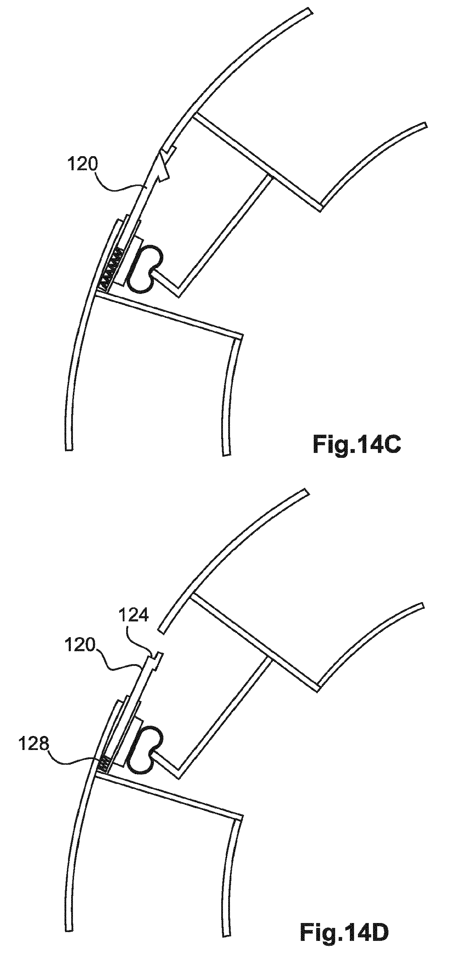

Fig. 14C shows the deploying edge 79 in a state when the door is closed.

Fig. 14D shows a further example, where the deploying edge 79 comprises a stepped edge, for example for engaging with the skin of the means of transportation.

As a further option, also applicable for the other examples, an actuator 75 is provided as an activating element.

According to a further example, shown in Fig. 9, as an example with a dual lock fastener attachment, an engagement arrangement is provided for the fastening device. The engagement arrangement is referred to with reference number 73, and comprises a plurality of clamping pairs 71, comprising a first and second clamping component 69a,b provided on the cover plate and the skin respectively. The first and second clamping components each comprise at least one engaging portion to engage with an engaging portion of the other of the second and the first clamping component. The engaging portions engage behind each other in a direction transverse to the skin's surface. The engaging portions engage with each other when the door is closed in a closing movement direction in a sliding manner such that the cover plate and the skin are urged against each other in a direction transverse to the closing movement direction.

For example, mushroom-like pins may be provided with sidewards engagement portions to engage each other in a sliding movement.

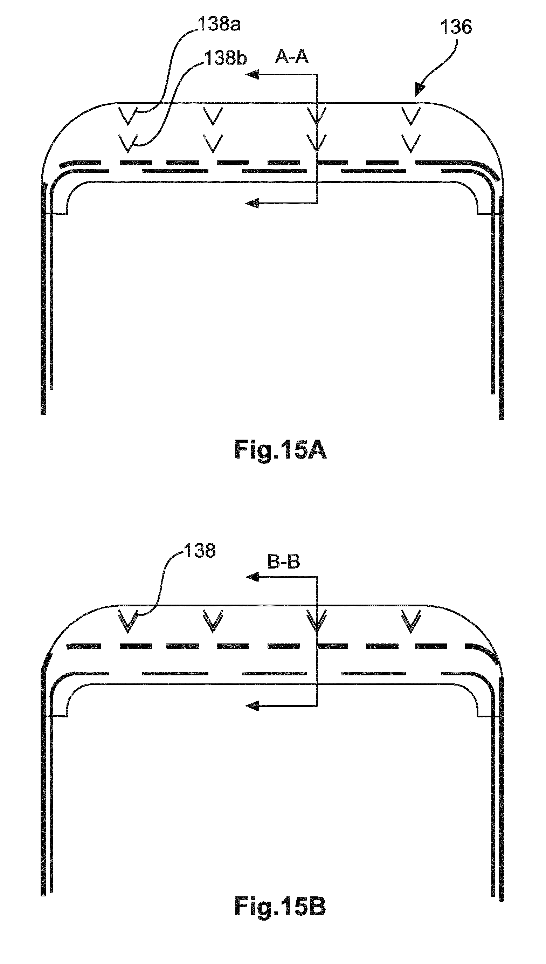

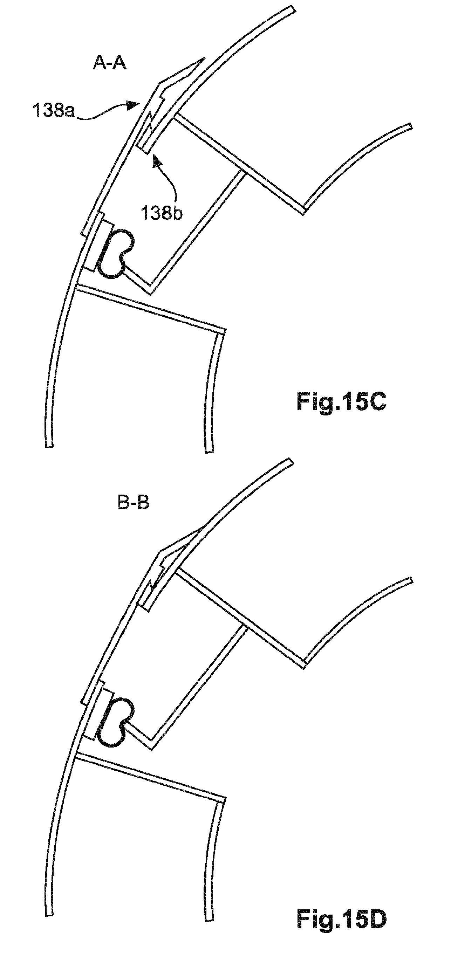

As a further example of an engagement arrangement, a dovetail locking system 67 is shown in Fig. 15.

Fig. 15A shows an outside view of the door in an open position. For example, V-shaped fittings 65a, 65b are attached to the cover plate and to the skin.

Fig. 15B shows the door in a closed position, indicating that the V-shaped fittings are now engaging each other.

Fig. 15C shows a cross-section along the sectional line B-B of Fig. 15B. As indicated, the door is still slightly open and the dovetails are not in contact yet.

Fig. 15D shows the dovetail locking system in a state when the door is closed and the dovetails are engaging behind each other such that the cover plate is temporarily fixed to the skin.

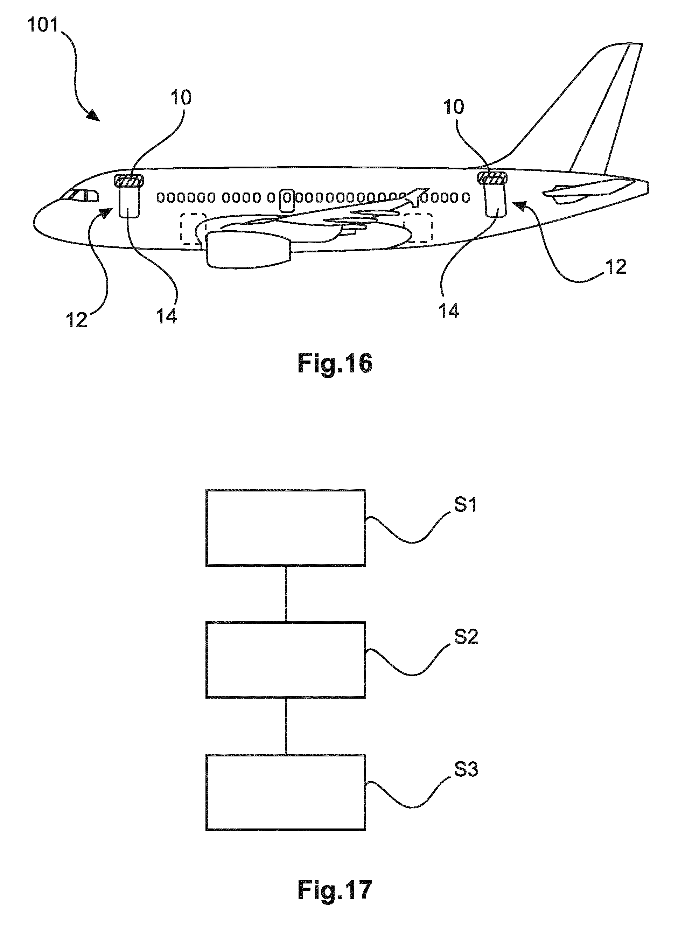

Fig. 16 shows an aircraft 101 with several door openings 12 according to an embodiment of the invention and with several doors 14, on which a cover plate 10 according to an embodiment of the invention is respectively arranged.

Fig. 17 shows a flowchart that illustrates the steps of a method for closing a door 14 on a means of transportation 100 according to an embodiment of the invention.

In a first step S1, door 14 is moved into the door frame 16 in the direction of the skin 18 of the means of transportation 100, wherein the door clearance 20 between the skin 18 of the means of transportation 100 and the door 14 is covered with the cover plate 10.

In a second step S2, door 14 is locked in the door frame 16 with a transverse motion, wherein the transverse motion may, for example, be a downward motion of the door 14 in the door frame.

In a third step S3, the cover plate 10 is fixed on the skin 18 by the fastening device 22, 22', 22". This may be realized, for example, with hook elements 24, 26 on the cover plate 10 and the skin 18, wherein the hook elements 24, 26 are realized in such a way that they engage into one another during the transverse motion and thereby fix the cover plate 10 as described with reference to Figs. 4A, 4B and 4C. However, the cover plate 10 may also be fixed by means of a magnetic element 28 on the skin 18 and a magnetically active film on the cover plate 10 as described with reference to Fig. 5.

Step S3 may be carried out simultaneously with step S2. However, step S3 may also be carried out after step S2.

The first step S1 is also referred to as step a), the second step S2 as step b), and the third step S3 as step c).

As a supplement, it should be noted that "comprising" does not exclude any other elements or steps, and that "a" or "an" does not exclude a plurality. It should furthermore be noted that features or steps that were described with reference to one of the above exemplary embodiments can also be used in combination with other features or steps of other above-described exemplary embodiments. Reference symbols in the claims should not be interpreted in a restrictive sense.

## Claims

1. A cover plate (10) for covering a door clearance (20) between a skin (18) of a means of transportation (100) and a door (14), with the cover plate (10) comprising:
- a mounting region (11a) for permanently fastening the cover plate (10) on the door (14);
- a covering region (11b) for covering the door clearance (20); and
- a fastening device (22, 22', 22") that is designed for fixing the covering region (11b) on the skin (18) when the door (14) is closed.

2. Cover plate (10) according to claim 1,
wherein the fastening device (22, 22', 22") is designed for generating a force when the door (14) is closed such that the covering region (11b) is pressed against the skin (18); and/or
wherein, preferably, a door locking mechanism is provided for temporarily locking the door in a closed state urging the door against a door frame; and
wherein the fastening device provides an additional fixation force for fixing the covering region on the skin when the door is closed at least during a state of moving condition of the means of transportation.

3. Cover plate (10) according to claim 1 or 2,
wherein the covering region is provided with an abutting portion (40) comprising an abutment surface (42) for abutting the skin in an abutment direction (44) when the door is closed.

4. Cover plate (10) according to claim 3,
wherein the covering region is provided as a morphing structure (46) deformable at least in the abutment direction;
wherein the fastening device comprises a deformation contact surface (58) provided on the covering region on a side of the abutment surface for a pressing abutment of an actuating element (60) when the door is closed; and
wherein the deformation contact surface is arranged on the covering region such that a pressing force (62) in a direction opposite to the abutment direction leads to a deformation (64) of the covering region such that the abutting portion is deformed in the abutment direction.

5. Cover plate (10) according to claim 3 or 4,
wherein the fastening device comprises a bimetal arrangement (80) provided in the covering region;
wherein the bimetal is configured such that a first degree of deformation is provided in a first temperature range and a second degree of deformation is provided in a second temperature range;
wherein the second degree of deformation is larger than the first degree of deformation in the abutment direction; and
wherein the second temperature range relates to driving condition temperatures of the means of transportation, and the first temperature range relates to temperature conditions above the second temperature range.

6. Cover plate (10) according to one of the claims 1 to 3,
wherein the fastening device comprises an engagement device (82) for activating a movable component (84) provided on the skin's edge of the clearance; and
wherein the engagement device is provided for causing the movable component to move towards the door, thus covering the clearance.

7. Cover plate (10) according to claim 3,
wherein the fastening device comprises an active engagement device (92) for engaging behind an edge of the skin to pull (96) the cover plate towards the skin such that an abutment force of the abutment surface is increased.

8. Cover plate (10) according to claim 7,
wherein the door cover plate comprises a pneumatic sealing device (112) that has a locking edge (114); and
wherein the pneumatic sealing device
- is deflated in an open state of the door, and
- is inflated when the door is closed such that the locking edge acts as the engagement device.

9. Cover plate (10) according to claim 3,
wherein the fastening device comprises an engagement arrangement (130) with a plurality of clamping pairs (132) each comprising a first and a second clamping component (134a,b) provided on the cover plate and the skin respectively;
wherein the first and second clamping components each comprise at least one engaging portion to engage with an engaging portion of the other of the second and first clamping component;
wherein the engaging portions engage behind each other in a direction transverse to the skin's surface; and
wherein the engaging portions engage with each other when the door is closed in a closing movement direction in a sliding manner such that the cover plate and the skin are urged against each other in a direction transverse to the closing movement direction.

10. Cover plate (10) according to one of the claims 1 to 3,
wherein the fastening device comprises a deploying edge (120) of the cover plate that extends when the door is closed to rest against a guide edge of the skin; and
wherein an activating element (126) is provided for deploying the deploying edge; wherein the activating element is activated by the closing movement of the door when the door is closed.

11. Cover plate (10) according to one of the claims 1 to 3,
wherein the fastening device (22, 22', 22") comprises at least one hook element (24) arranged on a side of the cover plate (10) that faces the skin (18); and
wherein the at least one hook element (24) is designed for engaging into at least one corresponding hook element (26) arranged on a side of the skin (18) that faces the cover plate (10) when the door (14) is closed in order to fix the cover plate (10) on the skin (18).

12. Cover plate (10) according to one of the preceding claims, further comprising a magnetically active layer (30) that is arranged at least in a section of the cover plate (10) on a side of the cover plate (10) that faces the skin (18) and designed for being pulled in the direction of the skin (18) by a magnetic element (28).

13. A door arrangement (12) for a means of transportation (100), with the door arrangement (12) comprising:
- a door frame (16);
- a door (14); and
- a cover plate (10) according to one of claims 1 to 12 that is fastened on the door (14).

14. An aircraft (101) with a cover plate (10) according to one of claims 1 to 12 and/or with a door arrangement (12) according to claim 13.

15. A method for closing a door (12) of a means of transportation (100), with the method comprising the steps of:
a) moving (S1) the door (14) in the direction of the skin (18) of the means of transportation (100) into a door frame (16);
b) covering (S2) a door clearance (20) between the skin (18) of the means of transportation (100) and the door (14) with a cover plate (10); and
c) fixing (S3) the cover plate (10) on the skin (18) by a fastening device (22, 22', 22") on the cover plate (10).
